(19) Europäisches Patentamt / European Patent Office / Office européen des brevets

(11) **EP 1 473 818 B1**

(12) **FASCICULE DE BREVET EUROPEEN**

(45) Date de publication et mention
de la délivrance du brevet:
**21.04.2010 Bulletin 2010/16**

(51) Int Cl.:
***H02M 1/08*** *(2006.01)*

(21) Numéro de dépôt: **04354018.6**

(22) Date de dépôt: **29.04.2004**

(54) **Circuit de commande d'un triac**

Treiber eines Triacs

Driver for triac

(84) Etats contractants désignés:
**DE FR GB IT**

(30) Priorité: **29.04.2003 FR 0305285**

(43) Date de publication de la demande:
**03.11.2004 Bulletin 2004/45**

(73) Titulaire: **STMicroelectronics SA**
**F-92120 Montrouge (FR)**

(72) Inventeurs:
• **Peron, Benoît**
**37000 Tours (FR)**

• **Benabdelaziz, Ghafour**
**37700 Saint Pierre Des Corps (FR)**

(74) Mandataire: **de Beaumont, Michel**
**Cabinet Michel de Beaumont**
**1, rue Champollion**
**38000 Grenoble (FR)**

(56) Documents cités:
**DE-A- 2 163 622      US-A- 3 723 769**
**US-A- 5 914 628**

EP 1 473 818 B1

**Description**

La présente invention concerne la commande d'interrupteurs bidirectionnels de type triac qui ont pour caractéristique de se bloquer automatiquement par disparition du courant qui traverse le commutateur. De tels commutateurs sont souvent utilisés pour commander des charges alimentées par le secteur de distribution électrique et la fermeture du commutateur doit être réamorcée à chaque demi période.

DE 2 163 622 prévoit deux sources de courant tête-bêche dans son montage de commande d'un triac, ce deux sources placées entre la gâchette et l'électrode de puissance côté gâchette et par l'intermédiaire d'un triac.

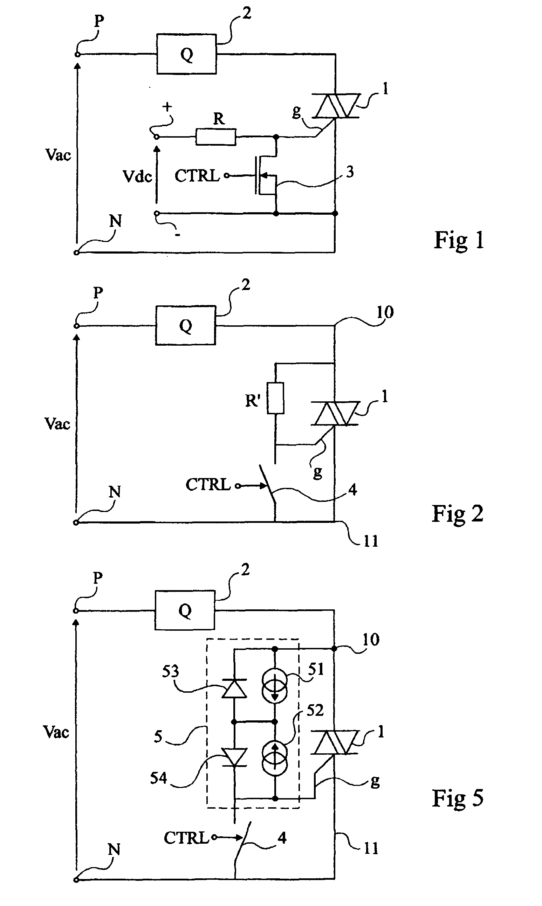

La figure 1 représente un premier exemple de circuit de commande classique d'un triac 1 commandant une charge 2 (Q) alimentée par une tension alternative Vac (bornes P et N) . Dans l'exemple de la figure 1, le triac 1 a été connecté en série avec la charge 2. On notera cependant que les triacs peuvent également être connectés en parallèle avec la charge qu'ils commandent, sans que cela change quoi que ce soit à ce qui sera décrit par la suite.

Dans l'exemple de la figure 1, la gâchette g du triac est reliée à celle des électrodes de puissance du triac qui est opposé à la charge 2 par un interrupteur 3 (dans cet exemple, un transistor NMOS). De plus, la gâchette g est reliée par une résistance R de conversion courant-tension à une première borne + d'application d'une tension continue Vdc nécessaire à la commande du triac. La deuxième borne - d'application de la tension Vdc est reliée à la borne N d'application de la tension alternative opposée à celle à laquelle est connectée la charge 2, c'est-à-dire à l'une des électrodes de puissance du triac 1 et à la source du transistor 3. La grille du transistor 3 reçoit un signal de commande CTRL de type logique permettant la commande en tension du triac 1.

Dans l'exemple de la figure 1, le triac 1 est rendu normalement passant c'est-à-dire qu'en l'absence de signal de commande sur la borne CTRL, le triac 1 conduit pourvu qu'une tension continue Vdc soit appliquée entre les bornes + et -. Le transistor 3 sert à bloquer le triac en empêchant son réamorçage automatique par le court-circuit effectué de sa gâchette et de son électrode de puissance connectée à la borne N.

Un inconvénient du schéma de la figure 1 est qu'il engendre une consommation permanente dans le circuit de commande lorsque l'on veut maintenir le triac 1 ouvert.

Un autre inconvénient est qu'il est nécessaire de fournir un courant provenant d'une alimentation auxiliaire continue (tension Vdc).

Un autre inconvénient à prévoir un triac normalement passant est qu'en cas de dysfonctionnement du circuit de commande (non représenté) fournissant le signal CTRL, le triac 1 conduit et la charge 2 reste alimentée. Une telle situation peut être dangereuse et n'est, à tout le moins, pas souhaitable.

Pour rendre le triac 1 normalement ouvert dans le schéma de la figure 1, on pourrait prévoir un commutateur 3 qui soit normalement passant et dont le signal de commande provoque l'ouverture donc, par voie de conséquence, la fermeture du triac

1. Toutefois, l'inconvénient de nécessiter une alimentation auxiliaire reste présent, de même que la présence d'un courant de fuite permanent dans le commutateur 3.

La figure 2 représente un deuxième exemple classique de circuit de commande d'un triac 1 de commande d'une charge 2 avec laquelle il est placé en série entre deux bornes P et N d'application d'une tension alternative Vac. Dans cet exemple, la gâchette g du triac est reliée par une résistance R' à l'électrode de puissance 10 du triac côté charge 2 et est reliée à la borne N (électrode de puissance 11 du triac opposé à la borne 2) par un interrupteur 4 recevant un signal de commande CTRL. La résistance R' amorce le triac 1 à chaque alternance de l'alimentation alternative pourvu que la gâchette g et l'électrode 11 ne soient pas court-circuitées, par l'interrupteur 4.

Ainsi, si l'interrupteur 4 est un interrupteur normalement ouvert, le triac 1 est rendu normalement passant ce qui reproduit l'inconvénient de sécurité exposé ci-dessus en relation avec la figure 1.

Par contre, en prévoyant un interrupteur 4 normalement fermé, le triac 1 est par défaut bloqué et le signal CTRL provoque l'ouverture de l'interrupteur 4 lorsque l'on souhaite rendre la charge 2 alimentée.

Le circuit de la figure 2 présente l'avantage de ne pas rendre nécessaire la présence d'une alimentation auxiliaire continue pour fournir l'amorçage du triac 1.

De plus, à la différence du schéma de la figure 1 où un courant de fuite est présent en permanence soit dans la gâchette du triac soit dans le transistor MOS 3 de commande, le courant de fuite de l'exemple de la figure 2 n'est présent que dans la gâchette du triac par la résistance R'.

Dans le schéma de la figure 1, le recours à une alimentation auxiliaire accroît considérablement la consommation des circuits de commande. Cela requiert soit de surdimensionner les convertisseurs correspondants soit des batteries de capacité suffisante.

Dans la solution de la figure 2, le courant nécessaire à la fermeture du triac 1 provient de la tension alternative Vac, donc en général du secteur de distribution électrique.

Un inconvénient de cette solution reste toutefois que le triac 1 présente un retard à l'amorçage à chaque alternance de la tension alternative d'alimentation. Ce retard vient du fait que le courant traversant la résistance R' doit, à chaque alternance de la tension d'alimentation Vac devenir supérieur au courant d'amorçage du triac 1 avant que celui-ci se mette en conduction. Comme ce courant traverse également la charge 2, le retard à l'amorçage dépend également de cette charge.

Ce retard est donné par la relation suivante :

$$\Delta t = \frac{1}{\omega} \cdot \text{Arc sin}\left(\frac{I_g \cdot (Z2 + R') + V_{gt}}{Vac_{cur}}\right),$$

où Ig représente le courant de gâchette nécessaire à l'amorçage du triac 1, où Z2 représente l'impédance de la charge 2, où $V_{gt}$ représente la tension de la gâchette g du triac, où $Vac_{cur}$ représente la valeur maximale de la tension alternative Vac et où $\omega$ représente la pulsation de la tension Vac.

Un retard à l'amorçage du triac à chaque alternance de l'alimentation est néfaste dans la mesure où cela provoque des pics de courant et/ou de tension indésirables.

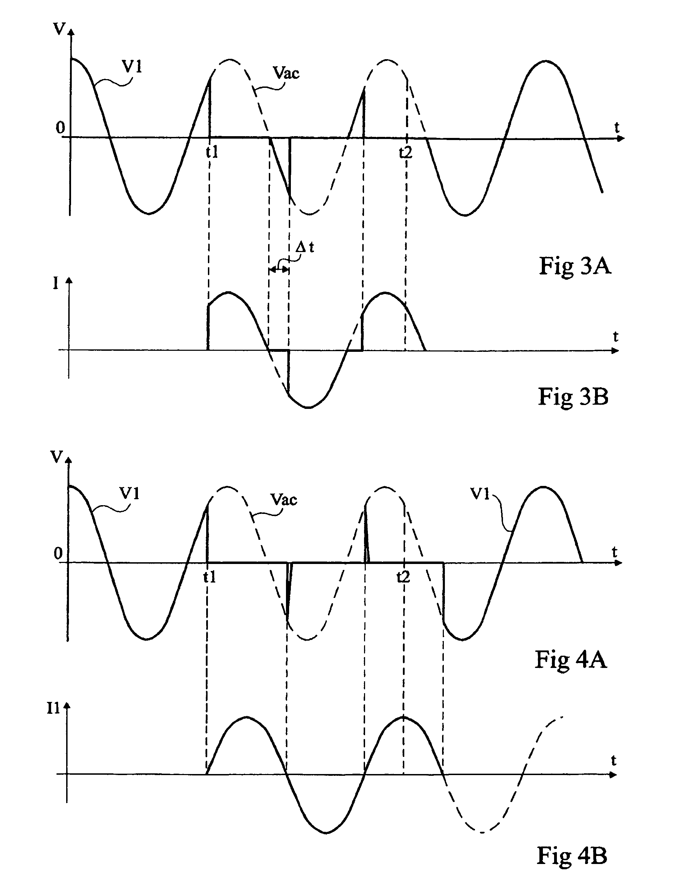

Les figures 3A et 3B sont des chronogrammes illustrant le phénomène de retard à l'amorçage du triac sur une charge résistive. La figure 3A représente un exemple d'allure de la tension alternative d'alimentation Vac et de la tension V1 aux bornes du triac. La figure 3B illustre l'allure du courant I dans la charge 2. Pour simplifier, on néglige ici les courants de fuite et les chutes de tension qu'ils engendrent.

On suppose initialement le triac 1 ouvert. Par conséquent, le courant I est nul et la tension V1 aux bornes du triac 1 correspond à la tension alternative Vac. On suppose l'inversion de l'état du signal CTRL de commande à un instant t1 dans le but de provoquer la fermeture du triac 1. Si l'instant t1 intervient suffisamment tard dans une période de la tension Vac, le triac s'amorce à cet instant t1 et un courant I non nul circule alors dans la charge Q. Comme on a supposé la présence d'une charge résistive, l'allure de ce courant I est synchrone avec l'allure de la tension Vac. Au passage par zéro suivant du courant traversant le triac, celui-ci s'ouvre. Il faut ensuite attendre l'expiration du retard $\Delta t$ suivant le début de l'alternance avant que l'amorçage du triac ait lieu. Plus la charge Q présente une résistance importante, plus le retard à l'amorçage sera important avant que le courant d'amorçage du triac soit atteint.

On suppose à un instant t2 une nouvelle inversion du courant CTRL dans le but d'éteindre le circuit par l'ouverture du triac 1. Dans l'exemple de la figure 2, cela revient à provoquer la fermeture de l'interrupteur 4. Le triac ne se bloque toutefois qu'au passage par zéro suivant de la tension Vac par annulation du courant qui le traverse. A partir de ce passage par zéro, la tension V1 redevient approximativement égale à la tension Vac.

On notera que, pour qu'un tel circuit fonctionne, il faut que la résistance R' soit très grande devant la résistance de la charge 2 faute de quoi le courant de fuite lorsque l'interrupteur 4 est fermé serait trop important, ce qui reviendrait à allumer la charge 2.

Les figures 4A et 4B illustrent le fonctionnement d'un circuit classique de commande d'un triac de type de celui représenté en figure 2 sur une charge Q essentiellement inductive.

On suppose là encore une ouverture de l'interrupteur 4 à un instant t1 pour provoquer l'amorçage du triac. Comme il s'agit d'une charge inductive, le courant I dans la charge croît à partir de 0 (au lieu du pic sur une charge résistive) . La charge inductive retarde l'ouverture du triac lors du passage par zéro de la tension Vac. Toutefois, cela provoque un pic de tension V1 à chaque passage par zéro du courant I dans la mesure où la tension Vac aux bornes du circuit n'est alors pas nulle.

A un instant t2 où le signal de commande CTRL s'inverse dans le but de fermer l'interrupteur 4, le courant I ne disparaît pas immédiatement mais attend la fin de son alternance. A cet instant, la tension V1 rejoint brusquement la tension Vac.

L'importance des pics de tension V1 dépend de la valeur de l'inductance de la charge 2 qui conditionne le déphasage entre le courant I dans la charge et la tension alternative Vac.

L'invention vise à améliorer les circuits de commande connus du type prélevant l'énergie sur la tension alternative d'alimentation de la charge (figure 2).

L'invention vise en particulier à minimiser le retard à l'amorçage sur une charge résistive.

La présente invention vise également à supprimer les pics de tension sur une charge inductive.

Plus généralement, l'invention vise à améliorer l'immunité aux pics de tension et de courant du triac de son circuit de commande.

Pour atteindre ces objets et d'autres, la présente invention prévoit un circuit de commande d'un triac, avec les caractéristiques techniques à la revendication 1.

Selon un mode de réalisation de la présente invention, l'interrupteur est de type normalement fermé.

Selon un mode de réalisation de la présente invention, une diode est connectée en parallèle à chaque source de courant.

Selon un mode de réalisation de la présente invention, lesdites sources de courant sont constituées de transistors MOS à canal N.

Selon un mode de réalisation de la présente invention, lesdits transistors sont des transistors déplétés.

L'invention prévoit également un circuit de commande d'une charge destinée à être alimentée par une tension alternative du type comprenant un triac avec les caractéristiques techniques définies à la revendication 5.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :

la figure 1 décrite précédemment représente un premier montage classique de commande d'un triac ;
la figure 2 représente un deuxième exemple de montage classique de commande d'un triac ;
les figures 3A et 3B illustrent le fonctionnement du circuit de la figure 2 sur une charge résistive ;
les figures 4A et 4B illustrent le fonctionnement du montage de la figure 2 sur une charge inductive ;
la figure 5 représente, de façon schématique, un mode de réalisation d'un circuit de commande d'un triac selon la présente invention ;
les figures 6A et 6B illustrent le fonctionnement du circuit de la figure 5 sur une charge résistive ;
les figures 7A et 7B illustrent le fonctionnement du circuit de la figure 5 sur une charge inductive ;
la figure 8 représente la caractéristique courant-tension du circuit de commutation de l'invention ; et
la figure 9 représente un mode de réalisation d'un élément actif limiteur de courant selon l'invention.

Les mêmes éléments ont été désignés par les mêmes références aux différentes figures. Pour des raisons de clarté, seuls les éléments qui sont nécessaires à la compréhension de l'invention ont été représentés aux figures et seront décrits par la suite. En particulier, la constitution des circuits fournissant les signaux logiques de commande n'a pas été détaillée, l'invention ne nécessitant aucune modification de ces circuits par rapport aux solutions classiques.

Une caractéristique de la présente invention est de rendre un triac normalement passant en reliant sa gâchette à l'électrode de puissance opposée au moyen d'un circuit limiteur de courant bidirectionnel en courant et en tension. La valeur du courant conditionné par le limiteur est choisie pour permettre l'amorçage du triac sous une faible tension.

Selon l'invention, le circuit limiteur de courant est un circuit actif à la différence d'une résistance constituant un circuit passif.

La figure 5 représente un mode de réalisation d'un circuit de commande d'un triac 1 destiné à commander une charge 2 (Q) alimentée par une tension alternative Vac. Comme précédemment, l'exemple de la figure 5 concerne un triac 1 connecté en série avec une charge 2 entre deux bornes P et N d'application de la tension Vac. On notera toutefois que l'invention s'applique également au cas où le triac 1 est connecté en parallèle avec la charge 2.

Le circuit de commande de l'invention est constitué d'un élément actif 5 limiteur de courant connecté entre la gâchette g du triac 1 et son électrode de puissance 10 opposée (connectée à la charge 2) et d'un interrupteur 4 reliant la gâchette g du triac à son autre électrode de puissance 11, l'interrupteur 4 interdisant l'amorçage automatique du triac 1 lorsqu'il est fermé. L'interrupteur 4 est commandé par un signal CTRL similaire à celui du cas classique de la figure 2.

Dans le circuit de commande de l'invention, l'élément limiteur de courant actif 5 est constitué de deux sources de courant 51 et 52 tête-bêche, chacune associée à une diode 53 ou 54 assurant le caractère bidirectionnel du dispositif. Dans l'exemple de la figure 5, les anodes des diodes 53 et 54 sont reliées au point milieu de l'association en série des sources de courant 51 et 52, leurs cathodes respectives sont reliées aux autres bornes des sources 51 et 52 connectées respectivement à la borne 10 et à la gâchette g.

L'exposé ci-dessus est fonctionnel et l'élément limiteur 5 pourra être réalisé en pratique de diverses manières, pourvu de respecter cette fonctionnalité.

Tant que l'interrupteur 4 reste ouvert, le triac 1 est dit normalement fermé en ce sens qu'il s'amorce automatiquement à chaque alternance de la tension Vac. Lors des alternances dites arbitrairement positives (potentiel de la borne P supérieur au potentiel de la borne N avec les conventions de la figure 5), la source 51 et la diode 54 permettent l'amorçage du triac. Lors des alternances négatives, c'est la source 52 et la diode 53 qui permettent cet amorçage.

Les valeurs imposées par les sources de courant 51 et 52 sont choisies pour permettre l'amorçage du triac 1 sous une tension la plus faible possible. En effet, plus le courant est élevé plus le courant de fuite du système est élevé. A cet égard, on notera que l'invention respecte la fonctionnalité intéressante de la figure 2, à savoir que l'alimentation nécessaire à la mise en route du triac est prélevée directement sur l'alimentation alternative Vac et que le courant de fuite correspond uniquement au courant dans la gâchette du triac 1.

On notera de plus, qu'à la différence du circuit de la figure 1 où le triac est passant lorsque l'interrupteur 3 est ouvert, le circuit de la figure 5 est compatible avec l'utilisation d'un interrupteur 4 de type normalement fermé interdisant l'amorçage du triac 1 en cas de panne du circuit de commande fournissant le signal CTRL.

Par exemple, l'interrupteur 4 est constitué d'un transistor JFET à canal P ou d'un transistor MOS déplété à canal P qui est donc fermé si une tension nulle est appliquée sur sa grille.

L'élément limiteur de courant 5 est par exemple constitué de deux transistors MOS rendus normalement passants et constituant les sources de courant 51 et 52. De préférence, ces transistors MOS sont rendus conducteurs pour une tension de grille nulle en étant, par exemple, des transistors MOS de type déplété. Le triac 1 s'amorce alors dès que la tension d'alimentation Vac devient supérieure à la résistance dynamique du circuit (résistance de la charge 2) multipliée par le courant de canal pré-formé. Un tel dispositif est équivalent à deux jonctions en série et minimise ainsi la chute de tension entre l'électrode 10 et la gâchette g.

Un avantage du circuit de la figure 5 est que l'élément limiteur de courant 5 est entièrement intégrable.

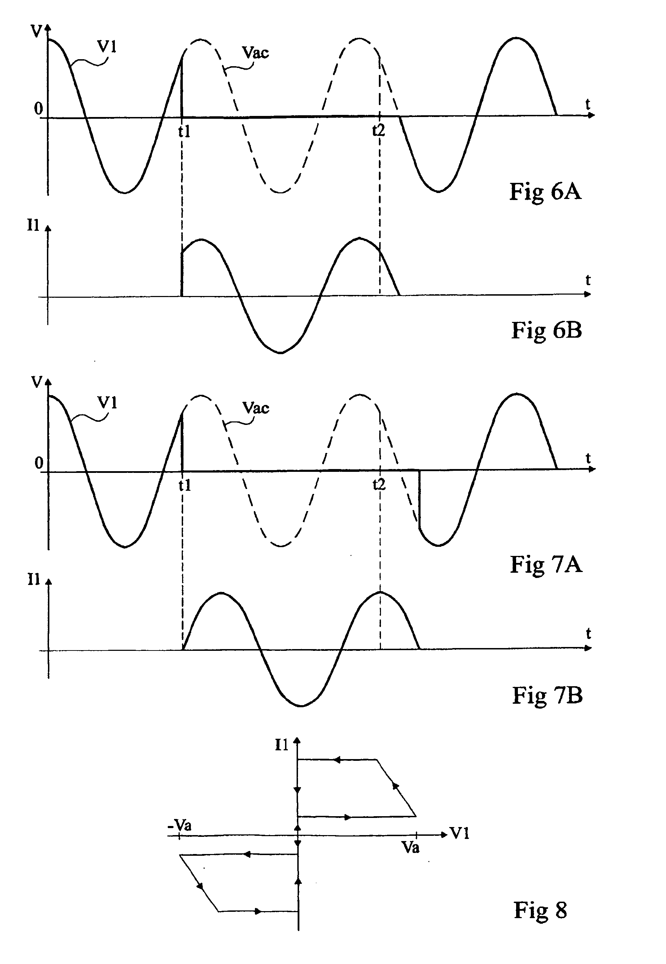

Les figures 6A et 6B illustrent le fonctionnement du circuit de commande de la figure 5 pour une charge 2 purement résistive. La figure 6A illustre l'allure de la tension V1 aux bornes du triac 1 et de la tension d'alimentation alternative Vac. La figure 6B illustre l'allure du courant I1 dans le triac

1. Les figures 6A et 6B sont à rapprocher des figures 3A et 3B décrites précédemment et comme pour ces dernières, on n'a pas tenu compte des courants de fuite.

Initialement, l'interrupteur 4 est fermé de sorte que le triac 1 est bloqué. La tension V1 suit alors la tension Vac.

On suppose qu'à un instant t1, on commute le signal de commande CTRL de façon à ouvrir l'interrupteur 4. Il en découle une disparition de la tension V1 et un amorçage immédiat du triac 1. Le triac se bloque au passage par zéro du courant qui le traverse. Toutefois, selon l'invention il redevient quasi immédiatement conducteur au début de l'alternance suivante en raison du faible courant imposé par les sources 51 et 52 pour rendre le triac conducteur.

Il en découle un avantage important de l'invention qui est que le retard à l'amorçage du triac est minimisé (il a idéalement disparu sur les figures 6).

Lors de l'extinction du circuit par une nouvelle commutation à l'instant t2 du signal de commande CTRL afin de fermer l'interrupteur 4, le triac se bloque dès la fin de l'alternance comme c'était le cas pour le circuit de la figure 2.

Les figures 7A et 7B illustrent le fonctionnement du circuit de la figure 5 sous une charge inductive. Ces figures sont à rapprocher des figures 4A et 4B décrites précédemment. La figure 7A illustre l'allure de la tension V1 aux bornes du triac 1 et de la tension d'alimentation alternative Vac. La figure 7B illustre l'allure du courant I1 dans le triac 1.

Lors de la commutation du signal CTRL ouvrant l'interrupteur 4 (instant t1) le triac s'amorce immédiatement. Toutefois, s'agissant d'une charge inductive, le courant I1 part de zéro et est donc retardé (déphasé) par rapport à l'allure de la tension.

Lors du passage par zéro du courant I1, il ne se produit plus de pics de tension aux bornes du triac. Cela est dû au fait que, bien que la tension Vac soit à ce moment là non nulle, le courant est limité par l'une des deux sources 51 ou 52.

A l'instant t2 où le signal de commande de l'interrupteur 4 s'inverse de nouveau, le triac se bloque à la fin de l'alternance courante.

La figure 8 illustre la caractéristique courant-tension d'un triac 1 équipé d'un élément limiteur de courant 5 selon l'invention en l'absence de signal de commande (interrupteur 4 fermé). Comme il ressort de cette figure, le triac 1 devient amorçable par retournement dès que la tension à ses bornes atteint une valeur Va. La tension à ses bornes s'annule alors autorisant le passage du courant. En figure 8, les flèches illustrent, partant d'un courant I1 et d'une tension V1 nuls, le sens de parcours de la caractéristique courant-tension suite à une perturbation positive ou négative.

Un avantage induit par l'invention est alors que l'ensemble, triac + élément actif limiteur de courant dans sa gâchette, fournit un composant auto-protégé c'est-à-dire qu'il s'amorce automatiquement dès que la tension à ses bornes excède la tension Va (par exemple, lorsque des perturbations liées à la foudre sont appliquées à ses bornes par l'intermédiaire de la charge 2).

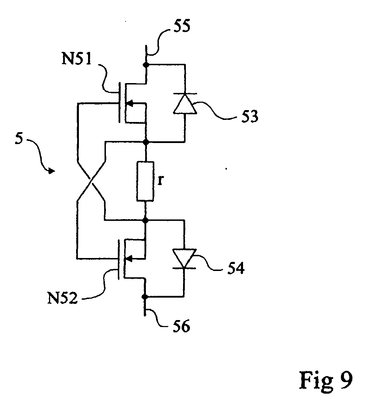

La figure 9 représente un mode de réalisation d'un élément 5 limiteur de courant actif bidirectionnel selon l'invention. Selon ce mode de réalisation, on utilise deux transistors MOS déplétés à canal N N51 et N52 connectés en série avec interposition d'une résistance r. Les transistors N51 et N52 sont tête-bêche (ou en série-opposition) en ce sens que le drain du transistor N51 définit une borne 55 externe de l'élément 5 à laquelle est connectée la cathode de la diode 53 tandis que le drain du transistor N52 définit l'autre borne externe 56 à laquelle est connectée la cathode de la diode 54. Les diodes 53 et 54 correspondent en pratique aux diodes parasites des transistors N51 et N52. Les sources respectives des transistors N51, N52 sont interconnectées par la résistance r. La grille du transistor N51 est reliée à l'anode de la diode 54 correspondant à la source du transistor N52. La grille du transistor N52 est reliée à l'anode de la diode 53 correspondant à la source du transistor N51.

Dans l'exemple de la figure 9, le transistor N51 conduit lors des alternances positives (tension positive appliquée entre les bornes 55 et 56). Le transistor N52 conduit pendant les alternances négatives.

La résistance r définit la contre injection permettant d'ajuster le courant dans les transistors N51 et N52 normalement passants. La résistance r est de faible valeur (typiquement quelques dizaines à quelques centaines d'ohms).

Dans le cas où on utilise des transistors MOS de type déplété, la résistance r peut être omise dans la mesure où les transistors MOS sont alors rendus conducteurs pour une tension de grille nulle.

**Revendications**

1. Circuit de commande d'un triac (1), commandant une charge alimentée par une tension alternative, comportant :

   un élément actif (5) limiteur de courant bidirectionnel constitué de deux sources de courant (51, 52) connectées tête-bêche en série, chacune étant associée à une diode (53, 54) assurant le caractère bidirectionnel du circuit, l'élément actif reliant la gâchette (g) du triac à l'électrode de puissance (10) située du côté opposé à la gâchette ; et un interrupteur (4) reliant la gâchette à l'électrode de puissance (11) du triac situé du même côté que la gâchette.

2. Circuit selon la revendication 1, dans lequel l'interrupteur (4) est de type normalement fermé.

3. Circuit selon l'une quelconque des revendications 1 ou 2, dans lequel lesdites sources de courant (51,52) sont constituées de transistors MOS à canal N (N51, N52).

4. Circuit selon la revendication 3, dans lequel lesdits transistors sont des transistors déplétés.

5. Circuit de commande d'une charge (2) destinée à être alimentée par une tension alternative (Vac) du type comprenant un triac (1), **caractérisé en ce qu'**il comporte un circuit conforme à l'une quelconque des revendications 1 à 4.

**Claims**

1. A circuit for controlling a triac (1), controlling a load supplied by an A.C. voltage, comprising:

   a bidirectional current-limiting active element (5) formed of two current sources (51, 52) connected head-to-tail in series, each being associated with a diode (53, 54) making the circuit bidirectional, the active element connecting the triac gate (g) to the power electrode (10) disposed on the side opposite to the gate; and a switch (4) connecting the gate to the power electrode (11) of the triac disposed on the gate side.

2. The circuit of claim 1, wherein the switch (4) is of normally-on type.

3. The circuit of claim 1 or 2, wherein said current sources (51, 52) are formed of N-channel MOS transistors (N51, N52).

4. The circuit of claim 3, wherein said transistors are depleted transistors.

5. A circuit for controlling a load (2) intended to be supplied by an A.C. voltage (Vac) of the type comprising a triac (1), **characterized in that** it comprises a circuit according to any of claims 1 to 4.

**Patentansprüche**

1. Eine Schaltung zum Steuern eines Triacs (1), das eine Last steuert, die mit einer Wechselspannung bzw. AC-Spannung versorgt wird, wobei die Spannung aufweist:

   ein bidirektionales strombegrenzendes Aktivelement (5), gebildet aus zwei Stromquellen (51, 52), verbunden in Gegenrichtung bzw. Head-to-Tail in Reihe, wobei jede assoziiert ist mit einer Diode (53, 54) die die Schaltung bidirektional macht, wobei das Aktivelement das Triac-Gatter (g) mit der Leistungselektrode (10), angeordnet auf der dem Gatter entgegengesetzten Seite verbindet; und einen Schalter (4), der das Gatter mit der Leistungselektrode (11) von dem Triac verbindet und zwar angeordnet auf der Gatterseite.

2. Schaltung nach Anspruch 1, wobei der Schalter (4) vom Normaleingeschalteten-Typ bzw. Normally-on-Typ ist.

3. Schaltung nach Anspruch 1 oder 2, wobei die Stromquellen (51, 52) aus N-Kanal-MOS-Transistoren (N51, N52) gebildet sind.

4. Schaltung nach Anspruch 3, wobei die Transistoren depleted bzw. verarmte Transistoren sind.

**5.** Eine Schaltung zum Steuern einer Last (2), gedacht um durch eine Wechselspannung bzw. AC-Spannung (Vac) versorgt zu werden und zwar von dem Typ, der ein Triac (1) aufweist, **gekennzeichnet dadurch dass** sie eine Schaltung gemäß irgendeinem der Ansprüche 1 bis 4 aufweist.

Fig 1

Fig 2

Fig 5

Fig 3A

Fig 3B

Fig 4A

Fig 4B

Fig 6A

Fig 6B

Fig 7A

Fig 7B

Fig 8

**Fig 9**

**EP 1 473 818 B1**

**RÉFÉRENCES CITÉES DANS LA DESCRIPTION**

**Documents brevets cités dans la description**

- DE 2163622